Europäisches Patentamt

**European Patent Office**

Office européen des brevets

(11) Publication number: **0 202 820**
**A2**

## (12) EUROPEAN PATENT APPLICATION

(21) Application number: **86303485.6**

(22) Date of filing: **08.05.86**

(51) Int. Cl.⁴: **C 02 F 1/32**

(30) Priority: **24.05.85 GB 8513170**

(43) Date of publication of application:
**26.11.86 Bulletin 86/48**

(84) Designated Contracting States:
**DE FR GB NL SE**

(71) Applicant: **W.M. STILL & SONS LIMITED**
**Fellows Road Hastings**
**East Sussex, TN34 3TX(GB)**

(72) Inventor: **Snowball, Malcolm Robert**
**8 Regency Gardens**
**St. Leonards East Sussex(GB)**

(74) Representative: **Allen, Oliver John Richard et al,**
**Lloyd Wise, Tregear & Co. Norman House 105-109 Strand**
**London, WC2R 0AE(GB)**

(54) **An ultra violet ray water purifier.**

(57) An ultra-violet ray water purifier has a tubular UV lamp and an annular duct having an inner cylindrical wall defined by a quartz tube containing said UV lamp and an outer wall bearing one or more internally facing ridges which restrict the flow of water in the axial direction of the duct and cause turbulence therein such that all the water is brought into close proximity with the quartz tube for equal treatment by the UV rays during its passage through the purifier. The ridge may comprise circumferential rings or one or several helixes spaced along the duct in the axial direction and where more than one helix is present, these may wind in alternate directions. Preferably the ridges are provided by indentations in the outer wall of the duct. Controlled heating means is included for heating the UV lamp.

*Fig.1.*

## "AN ULTRA VIOLET RAY WATER PURIFIER"

This invention relates to water purifiers and in particular to ultra-violet ray (UV) water purifiers.

It is known that harmful bacteria in water are killed if exposed to ultra-violet rays of a known "germicidal" wave length. This effect forms the basis of known ultra-violet water purifiers in which a tubular ultra-violet ray emitting lamp is enclosed in a tubular casing through which water is caused to flow in contact with or closely adjacent to, the glass envelope of the ultra-violet tube.

However, in water purifiers of this type water flows through the outer tubular casing in a direction parallel to the axis of the ultra-violet tube, sometimes known as "plugged" flow. Thus water flowing in streams adjacent the inner surface of the outer casing may not be brought sufficiently close to the ultra-violet tube for it to be purified.

An ultra-violet ray water purifier in accordance with this invention includes a means to cause turbulence, called herein a "turbulator", so arranged and disposed in the casing as to prevent water flowing smoothly therethrough but rather because of the turbulence, causing all the water passing through the purifier to be repeatedly brought closely adjacent to the ultra-violet tube. Accordingly there is provided an ultra-violet ray water purifier comprising a UV transparent sleeve means adapted to receive within its confines a tubular ultra-violet lamp and having an outer cylindrical surface, a water-tight jacket means surrounding the sleeve means and defining therewith an annular passage for conveying water through the rays of the said lamp, said jacket means having an inner surface, a water inlet at one end and a water outlet at the other end, and turubulator means for circumferentially restricting the axial flow of water in said annular passage such that it is turbulent, substantially all of the water passing between said inlet and said outlet being brought into close proximity with said outer surface of the quartz sleeve means.

The "turbulator" may be of many different forms and types but preferably takes the form of the outer casing being formed with an indented groove or grooves formed in the wall of and extending around the outer casing, preferably in a helical manner, the groove(s) terminating closely adjacent to the outer surface of the UV tube, or of a quartz tube surrounding the UV tube. Thus water flows primarily in an annular direction around the UV tube and secondarily through the narrow gap between the base of the groove (which is preferably of V-section) and the outer surface of the UV or quartz tube. The effect of the two water flows meeting causes turbulence and in turn ensures that all bacteria in the water is repeatedly brought into proximity with the source of the ultra violet rays during passage through the purifier.

A single groove may be provided in the outer casing arranged to run helically around the outer casing or alternatively there may be a series of separate circular groove (which will create turbulence in a different manner due to a series of throttle and release motions).

In the case of the helical groove the width of the gap between the bottom of the groove and the outer surface of the UV or quartz tube may, for example, vary between 3/4 and 2 mm but is preferably about 1 mm.

The relative dimensions of the purifier will vary depending upon desired throughput and can be connected in multiples (parallel) to give almost any desired throughput. Further "kill" efficiency can be gained by having the direction of the helical groove reversed alternately along the length of the purifier to increase turbulence. High throughput sterilizers will have the helix reversed several times along the length of the unit so that for example the groove extends in a right-hand helix for a third of the length of the purifier adjacent the inlet, the central section having a left-hand helix and the section adjacent the outlet having a right-hand helix.

Preferably the UV tube which is separated from the annular water passage by a sealed quartz tube has a bayonet or screw fitting to engage a corresponding socket at one end of the purifier. The contact at the other end of the tube may be engaged by a removable cap. Thus all that needs to be done to replace the tube without draining down the system is to remove the cap whilst leaving the annular water chamber sealed, remove the tube by rotating the exposed end thereof and replacing the tube with a new tube.

The invention will now be further described by way of example with reference to the accompanying drawings, in which:

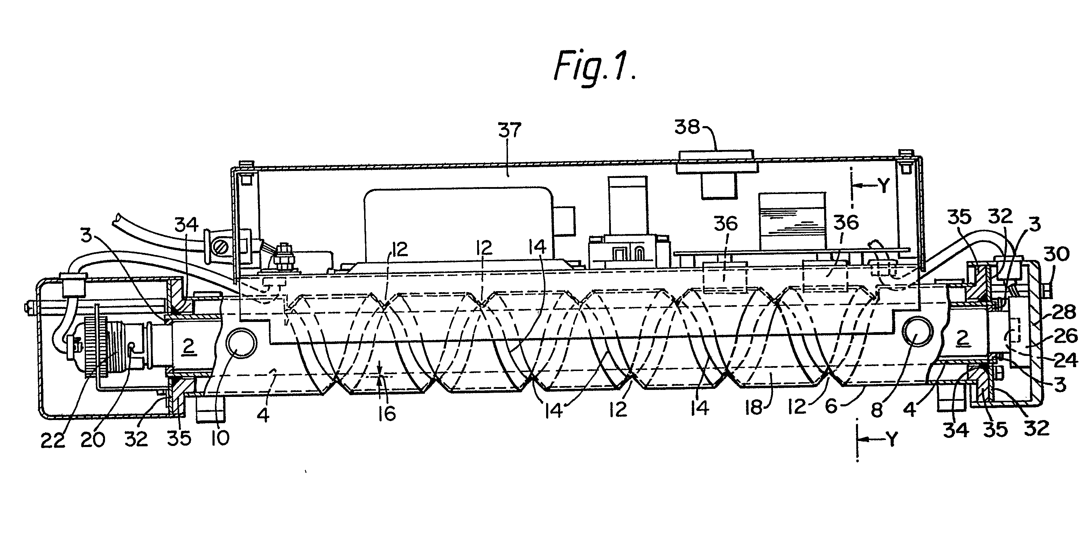

Figure 1 is a part sectional elevation of one embodiment of a water purifier in accordance with the invention;

Figure 2 is a diagram, to an enlarged scale, showing water flow directions along the length of the purifier;

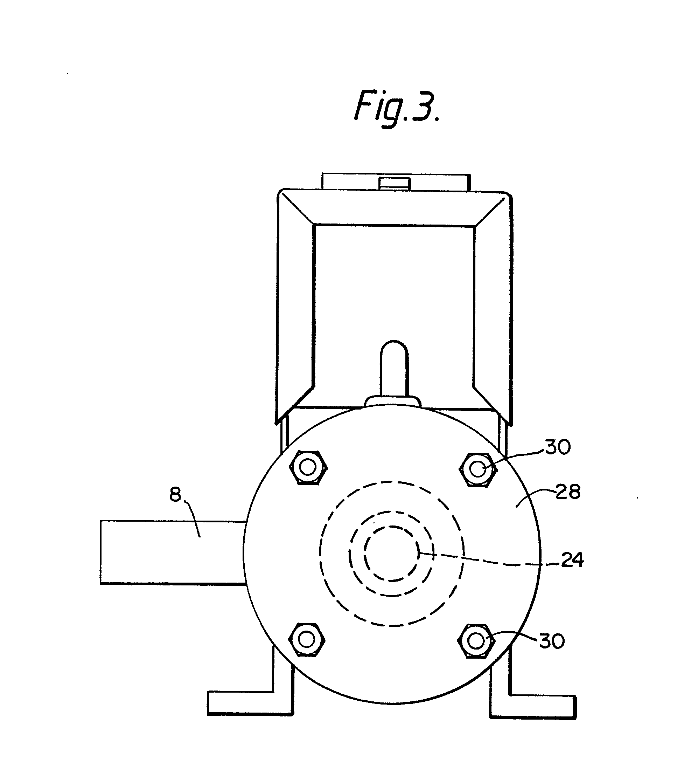

Figure 3 is an end elevation corresponding to Figure 1;

Figure 4 is a plan view of Figure 1;

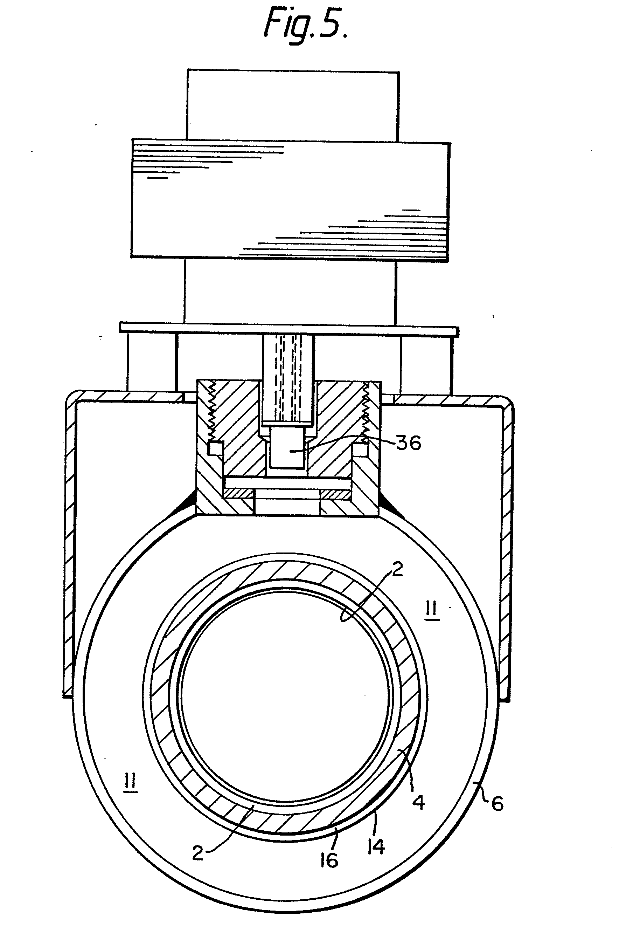

Figure 5 is a section on the line Y-Y of Figure 1;

Figure 6 shows another form of turbulator;

Figure 7 shows another form of turbulator;

Figure 8 is a diagram of one end of the ultra-violet tube illustrating a temperature control device for the tube; and

Figure 9 is a typical circuit diagram of a temperature control device to control such a device illustrated in Figure 8.

Referring to the drawings, the purifier comprises an ultra-violet (UV) tube 2 mounted on spacers 3 within a quartz glass tube 4. A tubular outer jacket or casing 6 surrounds and is spaced from the quartz tube 4.

The outer casing 6 has a water inlet 8 adjacent one end thereof and an outlet 10 adjacent the outer end. In use water flows through the space between the casing 6 and the quartz tube 4 from one to the other.

In order to prevent water flowing in a planar or "plugged" fashion between the inlet 8 and the outlet 10 and to make sure that all the water at some time during its passage through the purifier repeatedly flows adjacent the outer surface of the quartz tube, the outer casing is formed with a turbulator which as illustrated comprises a V-section groove 12 extending helically around the outer casing from one end to the other. The apex 14 of the groove is spaced by about 1 mm from the outer surface of the quartz tube 4 leaving a small water passage 16 which extends parallel to the axis of the UV tube 2.

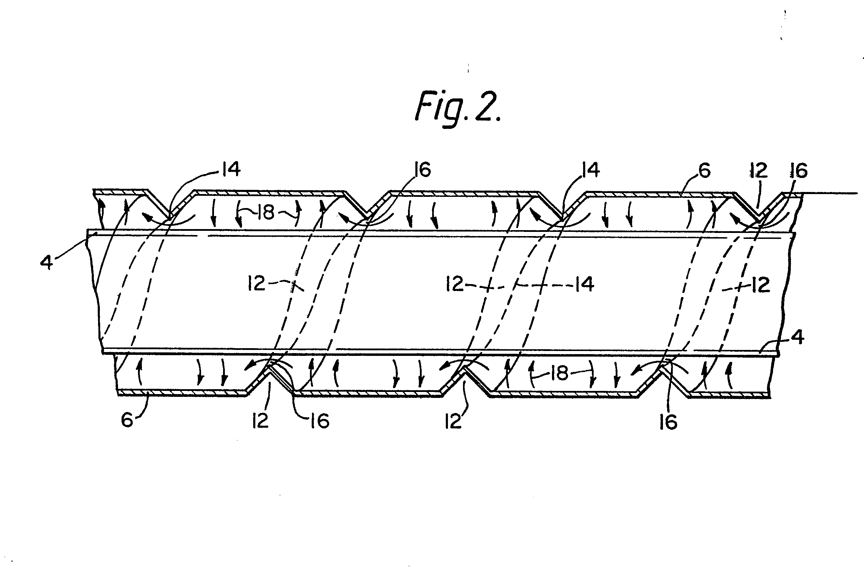

In use and as can be seen with reference to Figure 2, water flows primarily in an annular direction in the space 18 between the outer casing 6 and the outer surface of the quartz tube 4 and moves helically from one end to the other between the inlet 8 and outlet 10. However, a small secondary flow also takes place in an axial direction through the gap 16 and this water flow crosses the helical primary flow of the water causing increased turbulence. The resulting "swirling" flow illustrated in Figure 2 ensures that all the water repeatedly comes into contact with the outer surface of the quartz tube and hence the point of maximum radiation intensity, as it passes through the purifier. This ensures that the micro-organisms in the water receive a lethal dose of UV radiation by coming closely adjacent the ultra-violet rays which are being emitted from the UV tube 2 at the predetermined germicidal wavelengths (180 nM-280nM).

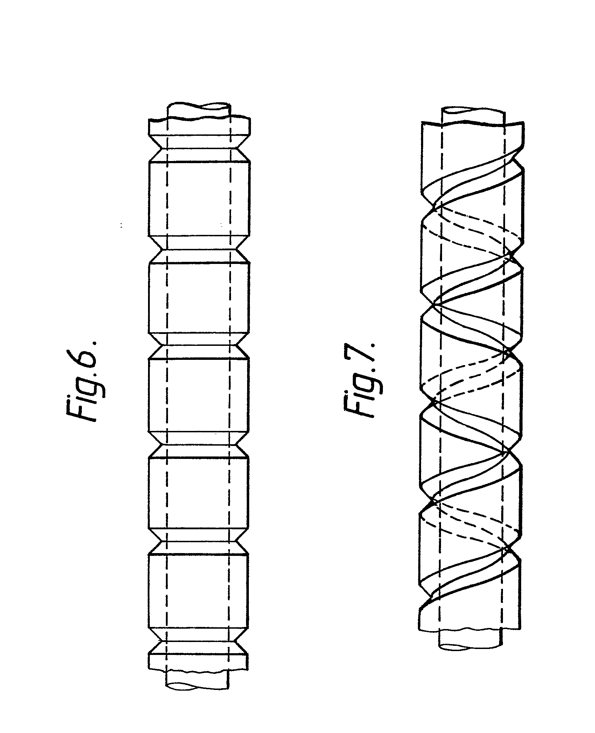

As seen in Figure 6, the turbulator may also take the form of a series of concentric grooves spaced along the length of the casing.

As seen in Figure 7, the turbulator may take the form of a sequence of axially disposed helixes which are alternately handed in opposite directions.

The UV tube 2 is formed at one end with a bayonet connection 20 for connection in a corresponding bayonet socket 22. The other

6.

end of the tube 2 is formed with a cap 24 which is engaged by a contact socket 26 carried by an end cap 28. Isolating the device from the electrical supply and removing the end cap 28 by, for example, undoing the bolts 30 leaves the end cap 24 exposed. This can then be grasped by a user who can then rotate the tube to disconnect the bayonet or screw connection 20 from the socket 22 at the other end of the purifier and a replacement tube can then be inserted.

During this procedure, the water chamber provided between the outer wall of the quartz tube and the inner wall of the outer casing remains sealed by a plate 32 and O-ring seal 34 acting against a closure number 35 blocking the outer ends of the annular channel 18.

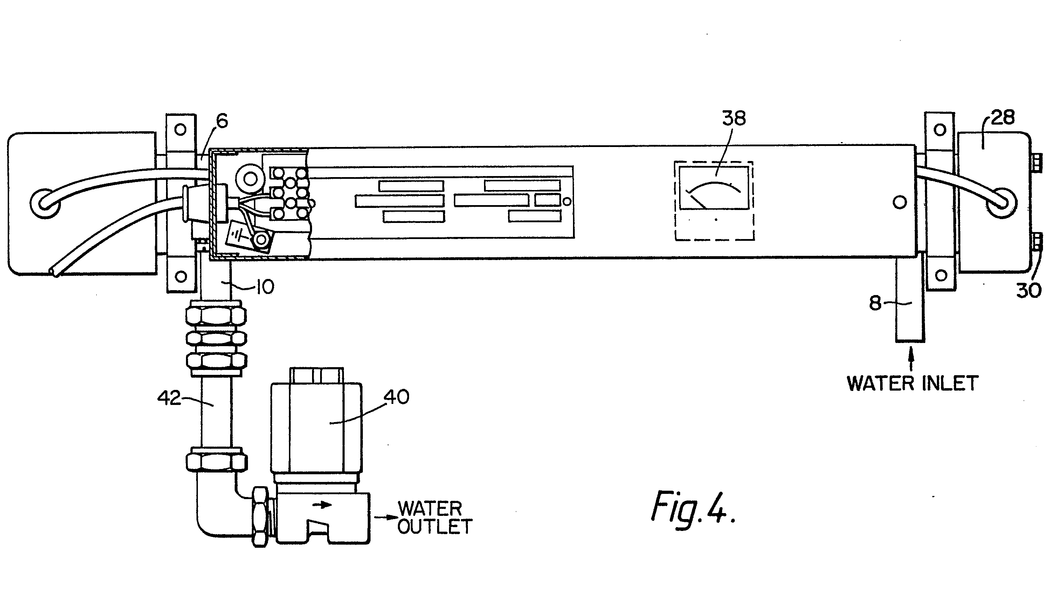

If the UV tube for whatever reason fails to produce the required intensity of germicidal ultra-violet radiation, this change in intensity or output of the germicidal wavelengths is detected by the detector members 36 connected to a control unit 37 which form the subject of our copending British application number 8513171 (having the same priority date as the present application). The detector acts to indicate the failure or deterioration of the lamp on an indicator 38 and/or with an audible alarm and acts to shut off a valve 40 in the water outlet pipe 42 connected to the outlet 10 of the casing 6 as illustrated in Figure 4.

It is well known that UV output, especially at the germicidal wavelengths, is adversely affected by lamp skin temperature. In other words, as the temperature of the lamp falls, i.e. because of a cold water supply, then the output of ultra-violet germicidal wavelengths and hence the germicidal killing efficiency, falls. In extreme circumstances, the output of the ultra-violet lamp can fall to about 30% of its optimum output.

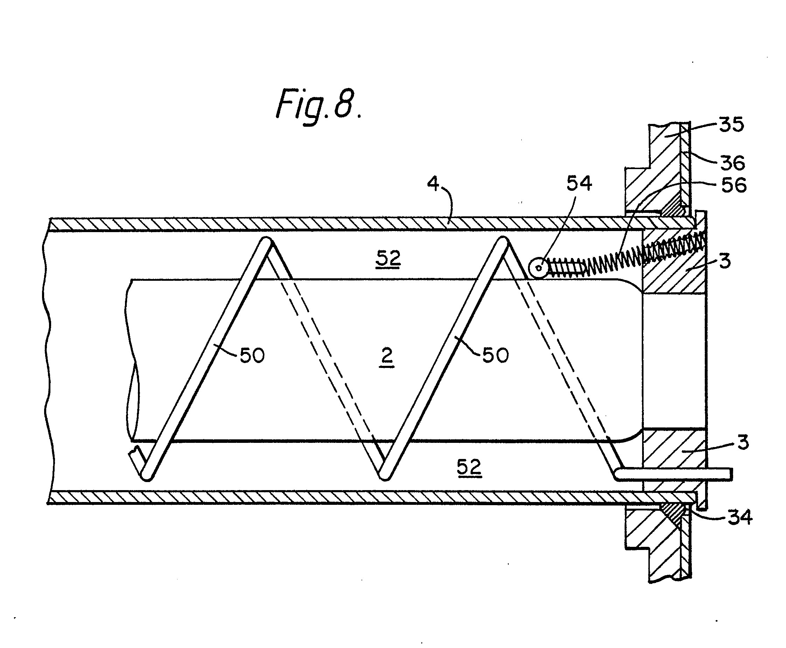

To overcome this problem and referring to Figure 8, a heating wire or tape 50 is wound in the form of a spring or helix and placed into the air space 52 between the ultra-violet lamp 2 and the quartz sleeve 4.

A thermistor, or similar temperature sensing device 54, is attached to the fixed spacer 3 by a spring 56 such that the temperature sensor rests on the surface of the ultra-violet lamp, detecting the temperature of the lamp.

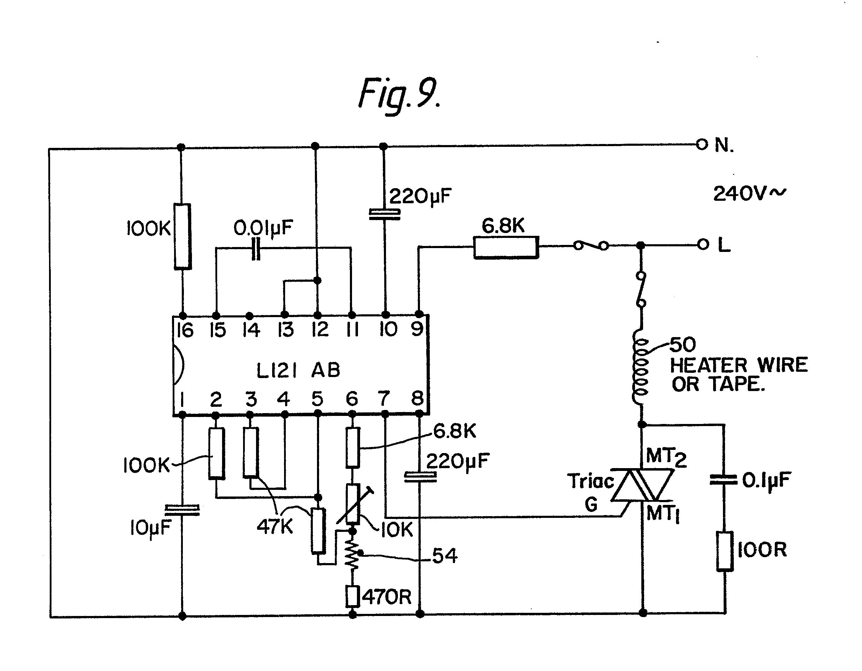

An electronic circuit forming a control device for the heater, as exemplified by that shown in Figure 9, can be set so that when the temperature of the lamp reduces below its optimum operating temperature (and hence its output reduces) from say cold water extracting heat from the quartz sleeve and the air space 52 (hence the lamp), then power will be switched to the heating device and the air space and hence the lamp, will heat up. As the lamp heats up, it reaches its pre-set optimum operating temperature and the circuit switches off the power to the heater wire. Hence, in this way the temperature of the lamp can be kept at its optimum working temperature and hence maximum UV output over a wide range of operating conditions and water temperatures.

Referring again to Figure 9, a solid state integrated circuit type L121 AB as supplied by SGS Semiconductors Ltd. of Planar House, Walton Street, Aylesbury, Buckinghamshire HP21 7QJ of Great Britain, is connected to operate as a zero voltage a.c. sensitive switch, in dependence upon the variation from a prescribed value of the resistance of the thermistor 54, which prescribed value is set by means of the variable resistance connected in series with the thermistor. As the resistance of the thermistor rises from the prescribed value due to a fall in its temperature, the switch circuit becomes sensitised and feeds an energising pulse to the gate of the triac each time the a.c. voltage across the power input terminals passes through zero thereby connecting the heater 50 between the said terminals in each half cycle of the a.c. supply. The switch circuit typically has a temperature sensitive range of between $20^o - 50^oC$.

0202820

1.

<u>CLAIMS</u>

1. An ultra-violet ray water purifier comprising a transparent sleeve means adapted to receive within its confines a tubular ultra-violet lamp and having an outer cylindrical surface, a water-tight jacket means surrounding the sleeve means and defining therewith an annular passage for conveying water through the rays of the said lamp, said jacket means having an inner surface, a water inlet at one end and a water outlet at the other end, and turbulator means for circumferentially restricting the axial flow of water in said annular passage such that it is turbulent, substantially all of the water passing between said inlet and said outlet being brought into close proximity with said outer surface of the sleeve means.

2. An ultra-violet ray water purifier according to Claim 1 wherein said turbulator means comprises a plurality of circumferential ridges on the inner surface of the jacket means which are spaced one from another along the axis thereof and define annular restrictions in said passage which restrict the axial flow of water through the jacket.

3. An ultra-violet ray water purifier wherein said turbulator means comprises one or more axially extending helical ridges on the inner surface of the jacket means defining a restricted annular axial passage and at least one helical passage within said jacket means.

5. An ultra-violet ray water purifier according to Claim 2 wherein said circumference ridges comprise deformations or grooves in the wall of the jacket means.

6. An ultra-violet ray water purifier according to Claim 3 wherein said one or more helical ridges comprise deformations or grooves in the wall of the jacket means.

7. An ultra-violet ray water purifier according to Claim 1 further comprising heater means in said          sleeve means for heating the ultra-violet lamp, temperature sensing means for sensing the temperature of the said lamp envelope and switch means responsive to the temperature sensed by said sensing means for switching power to the heater means when the temperature of said envelope falls below a prescribed value.

8. An ultra-violet ray water purifier according to Claim 7 wherein said switch means comprises a zero voltage a.c. sensitive switch circuit means which is connected to sense the value of an a.c. voltage source and is further connected to the gate electrode of a solid-state power switch connected between the heating means and an a.c. power supply, said zero voltage a.c. sensitive switch means providing turn-on current pulses to said solid-state power switch whereby the latter is made conductive each time the a.c. voltage source passes through zero voltage in the event that the temperature sensed by the temperature sensing means is less than the prescribed value.

9. An ultra-violet ray water purifier according to Claim 8 wherein said temperature sensing means comprises a thermistor and said zero voltage a.c. sensitive switch circuit comprises a solid state integrated circuit.

10. An ultra-violet ray water purifier according to Claim 1 wherein said transparent sleeve means comprises a quartz tube.

Fig.1.

0202820

Fig.2.

Fig.3.

*Fig.4.*

WATER INLET

WATER OUTLET

Fig.5.

5/8

0202820

Fig.6.

Fig.7.

Fig.8.

*Fig.9.*